Europäisches Patentamt

European Patent Office

Office européen des brevets

(19)

(11) Numéro de publication: **0 230 815**
**B1**

(12) **FASCICULE DE BREVET EUROPEEN**

(45) Date de publication du fascicule du brevet:
**12.12.90**

(51) Int. Cl.⁵: **C08L 77/12, C08L 77/10,**
**C08L 53/02, C08L 25/10**

(21) Numéro de dépôt: **86402771.9**

(22) Date de dépôt: **11.12.86**

(54) Compositions thermoplastiques à base de polyétheramides et de copolymeres styrène-diène et leur procédé de fabrication.

(30) Priorité: **16.12.85 FR 8518599**

(43) Date de publication de la demande:
**05.08.87 Bulletin 87/32**

(45) Mention de la délivrance du brevet:
**12.12.90 Bulletin 90/50**

(84) Etats contractants désignés:
**AT BE CH DE ES FR GB GR IT LI LU NL SE**

(56) Documents cités:
**FR-A- 2 354 367**

**CHEMICAL ABSTRACTS,**
**vol. 77, no. 12, 18 septembre 1972, page 76, no. 76544r,**
**Columbus, Ohio, US; & JP-A-71 38 611 (ASAHI**
**CHEMICAL INDUSTRY CO., LTD.) 13-11-1971**

(73) Titulaire: **ATOCHEM, 4 & 8, Cours Michelet La**
**Défense 10, F-92800 Puteaux(FR)**

(72) Inventeur: **Jacquemin, Jean-Pierre, Les Logis 31, Avenue**
**du Président Kennedy, F-27300 Bernay(FR)**
Inventeur: **Deleens, Gérard, Le Bout de la Forge La**
**Houssaye, F-27410 Beaumesnil(FR)**

(74) Mandataire: **Rochet, Michel et al, ATOCHEM**
**Département Propriété Industrielle La**
**Défense 10 4 & 8 Cours Michelet, F-92800 Puteaux(FR)**

**Description**

Les compositions thermoplastiques qui font l'objet de la présente invention résultent de la constatation que nous avons faite que les polyétheramides et les copolymères styrène-diène sont miscibles à l'état fondu en toutes proportions et donnent par refroidissement des compositions homogènes, aptes à être transformées en objets moulés par les techniques habituelles d'injection ou de compression ou en tubes, films, revêtements sur câbles ... par extrusion.

On peut également les réduire en poudres par broyage cryogénique, poudres qui seront utilisées pour revêtir des métaux par projection électrostatique ou fluidisation-trempage.

Les objets qui résultent de la transformation de ces compositions se caractérisent par des propriétés intéressantes, notamment, une grande souplesse, une dureté peu élevée, une bonne résistance à la déchirure, une bonne élasticité, qualité, qui les feront apprécier dans les industries de l'automobile, de la chaussure ... pour n'en citer que quelques unes.

On peut, du reste, en jouant sur la nature de chacun des constituants : polyétheramide et copolymère styrène-diène, et sur leurs proportions respectives, faire varier ces propriétés dans de larges limites.

Les compositions que nous revendiquons contiennent essentiellement de 0,1 à 99,9 pour cent en poids de polyétheramide et de 99,9 à 0,1 pour cent en poids de copolymère styrène-diène.

Par polyétheramides, nous entendons aussi bien les polyétheramides statistiques (c'est-à-dire formés par l'enchaînement aléatoire des divers constituants monomères) que les polyétheramides séquencés, c'est-à-dire de blocs présentant une certaine longueur de chaîne de leurs divers constituants.

Les polyétheramides séquencés résultent de la copolycondensation de séquences polyamides à extrémités réactives avec des séquences polyéthers à extrémités réactives, telles que, entre autres :

1°/ Séquences polyamides à bouts de chaînes diamines avec des séquences polyoxyalkylènes à bouts de chaînes dicarboxyliques.

2°/ Séquences polyamides à bouts de chaînes dicarboxyliques avec des séquences polyoxyalkylènes à bouts de chaînes diamines obtenues par cyanoéthylation et hydrogénation de séquences polyoxyalkylènes alpha-oméga dihydroxylées aliphatiques appelées polyétherdiols.

3°/ Séquences polyamides à bouts de chaînes dicarboxyliques avec des polyétherdiols, les polyétheramides obtenus étant, dans ce cas particulier, des polyétheresteramides.

La composition et la fabrication de tels polyétheresteramides ont été décrites dans les brevets français n° 74.18913 et 77.26678 au nom de la demanderesse et dont le contenu s'ajoute à la présente description.

Selon un mode de réalisation de l'invention, le polyétheramide associé au copolymère styrène-diène est un polyétheresteramide séquencé de poids moléculaire supérieur à 10.000, formé du produit de la copolycondensation d'un polyamide ou copolyamide alpha-oméga dicarboxylique présentant un poids moléculaire de 300 à 15.000 et, de préférence, 600 à 5.000, employé à raison de 95 à 15 % en poids, et d'un polyétherdiol présentant un poids moléculaire de 100 à 6.000 et, de préférence 200 à 3.000, employé à raison de 5 à 85 % en poids, ledit produit présentant un point de fusion compris entre 80 et 210°C.

Par copolymères de styrène et de diène, nous entendons tous les polymères résultant de la copolymérisation du styrène et d'un ou plusieurs diènes tels que isoprène, butadiène ...

Nous entendons, plus particulièrement, les copolymères séquencés de styrène et de butadiène ou d'isoprène dont la ou les chaînes médianes sont polydiéniques et les chaînes terminales polystyréniques, autrement dit du type S-B-S ou S-I-S.

Ils peuvent être obtenus par copolymérisation en solution, par catalyse anionique, de styrène et de butadiène ou d'isoprène ; suivant l'agent de couplage utilisé, ils seront linéaires ou ramifiés.

Ces copolymères styrène-diène peuvent contenir des huiles d'extension qui en augmentent la souplesse.

Selon un mode de réalisation de l'invention, on peut mélanger entre eux différents polyétheramides et différents copolymères séquencés.

En plus de ces deux constituants essentiels, ces compositions peuvent bien entendu comprendre des plastifiants, stabilisants à la chaleur ou à la lumière, charges ...

Parmi les plastifiants que l'on peut utiliser, nous mentionnerons les sulfonamides (plus particulièrement, la butylbenzène sulfonamide) et le parahydroxybenzoate d'éthyl-2 hexyle qui sont des plastifiants des polyétheramides.

La fabrication des compositions de l'invention se fait par malaxage à l'état fondu des deux constituants et refroidissement.

La température de malaxage doit être telle que les deux constituants soient bien fondus sans qu'il y ait naturellement décomposition de celui qui est le plus sensible à la chaleur.

On peut alimenter le malaxeur utilisé pour cette opération avec un mélange préalablement préparé, à la température ordinaire de polyétheramide et de copolymère ou bien alimenter ce malaxeur en continu avec chacun des deux constituants.

Un bon malaxage est indispensable mais, à l'inverse, un malaxage trop énergique est nuisible lorsque l'on utilise un copolymère ayant tendance à réticuler ce qui est le cas des triséquencés linéaires styrène-butadiène-styrène car un malaxage énergique, de même que la température, accélèrent cette réticulation ce qui conduit à des masses de trop forte viscosité, hétérogènes, de surcroît.

De bons résultats sont atteints en travaillant avec un malaxeur (par exemple, extrudeuse double vis ou co-malaxeur) donnant aux températures de travail choisies un taux de cisaillement sensiblement égal à 2000 sec.⁻¹.

Dans les exemples qui suivent, donnés à titre illustratif et nullement limitatif, les compositions ont été préparées dans un "ko-malaxeur" type PR46 de la Société Suisse BUSS AG.

Cet appareil se caractérise par le fait qu'il possède une seule vis dont le filet n'est pas continu, chaque spire de ce filet étant interrompue par trois échancrures, les parties restantes du filet constituant les ailettes de malaxage (voir figure jointe).

De plus, parallèlement à une rotation complète la vis effectue un va-et-vient axial.

Ce co-malaxeur est alimenté en continu, au moyen d'un doseur à vis spirale, avec un mélange, préalablement préparé au tonneau, de granulés secs de polyétheramide, de granulés ou poudres de copolymère styrène-diène et de divers stabilisants.

Le premier puits de dégazage, situé au milieu du co-malaxeur, reste inutilisé tandis que l'on applique un vide de 66,65 kPa 500 torr sur le deuxième puits, situé aux 2/3 de la longueur, pour éliminer les traces d'eau éventuellement présentes.

Ce co-malaxeur étant muni à son extrémité d'une filière à 4 trous de 4 mm de diamètre, il en sort en continu des joncs liquides que l'on solidifie et refroidit par immersion dans un bac d'eau froide avant de les faire passer dans un granulateur.

Les granulés qui en résultent sont soigneusement séchés.

Après en avoir déterminé l'indice de fusion suivant l'ASTM D 1238, exprimé dans en g/10 min., on les utilise pour mouler les éprouvettes qui seront soumises à différents tests permettant d'en déterminer certaines propriétés physiques.

C'est ainsi que nous en avons mesuré :
. la dureté SHORE A suivant l'ASTM D 1484,
. la contrainte, exprimée en MPa, et l'allongement en pour cent à la rupture en traction suivant l'ASTM D 638,
. la flèche maxim. en mm, la contrainte maxim. en MPa et le module en MPa lors des essais de flexion ASTM D 790,
. la résistance à la déchirure, exprimée en KNm⁻¹, sur des éprouvettes sans entaille ou avec entaille, dans le sens parallèle à l'injection, suivant la norme ISO 34.

Dans les exemples qui suivent, les constituants suivants ont été utilisés :

## POLYETHERAMIDE

Trois polyétheramides ont été mis en jeu, respectivement :
. le premier que nous désignerons par l'abréviation : Pa 12 PTMG-1, résulte de la polycondensation, suivant le mode opératoire décrit dans le brevet français n° 74.18913, de 33 parties en poids d'un prépolymère de polyamide 12 dicarboxylique (obenu à partir de lauryllactame et d'acide adipique) de masse moléculaire 600, avec 67 parties en poids de polyoxytétraméthylène glycol (PTMG) de masse moléculaire 2.000, ce polyétheresteramide ayant une viscosité inhérente de 1,80 dl.g⁻¹, mesurée à 25°C sur une solution de 0,5 g dans 100 g de méta-crésol.
. le deuxième, Pa 12 PTMG-2, résulte de la polycondensation, effectuée de la même manière, de 30 parties en poids de prépolymère de polyamide 12 adipique, de masse moléculaire 850, avec 70 parties de PTMG de masse moléculaire 2.000.

Il a une viscosité inhérente de 1,80 dl.g⁻¹.
. le troisième, Pa 6 PPG, résulte de la polycondensation de 80 parties de prépolymère de polyamide 6 dicarboxylique (à partir de caprolactame et d'acide adipique) de masse moléculaire 2.300, avec 20 parties de polyoxypropylène glycol (PPG) de masse moléculaire 600.

Il a une viscosité inhérente de 1,20 dl.g⁻¹.

## COPOLYMERE STYRENE-DIENE

Les quatre copolymères styrène-diène que nous avons utilisés sont des produits vendus par la société SHELL CHIMIE sous le nom de CARIFLEX® TR, respectivement :
. Le TR 1102 qui est un triséquencé S-B-S linéaire à 28 pour cent de styrène et 72 pour cent de butadiène - nous l'appellerons : S-B-S lin. 28-72.
. Le TR 1107 qui est un triséquencé S-I-S linéaire à 14 pour cent de styrène et 86 pour cent d'isoprène - nous l'appellerons : S-I-S lin. 14-86.
. Le TR 4203 qui est un triséquencé S-B-S ramifié à 35 pour cent de styrène et 65 pour cent de butadiène, contenant 33,5 pour cent en poids d'huile d'extension - nous l'appellerons S-B-S ram. 35-65.
. Le TR 4122 qui est un triséquencé S-B-S linéaire à 50 pour cent de styrène et 50 pour cent de butadiène contenant 35,5 pour cent en poids d'huile d'extension - nous l'appellerons S-B-S lin. 50-50.

En plus de ces deux constituants essentiels, nous avons utilisé des stabilisants :
. à la chaleur : IRGANOX® 1076 et PS 800, de la Société CIBA-GEIGY,
. à la lumière : TINUVIN® 350 de la même Société.

Exemple 1

Le co-malaxeur est alimenté en continu avec un mélange préalablement préparé au tonneau de:
– 30 parties en poids de granulés de Pa 12 PTGM 1
– 70 parties en poids de granulés de S-B-S lin. 28-72
– 0,2 partie en poids d'IRGANOX® 1076
– 0,1 partie en poids d'IRGANOX® PS 800
– 0,2 partie en poids de TINUVIN® 350

Les températures à l'intérieur du co-malaxeur, mesurées en 6 zones, sont en partant de l'entrée jusqu'à la sortie:
165°C – 165°C – 180°C – 180°C – 185°C – 170°C

Le taux de cisaillements est sensiblement égal à 2.000 sec.$^{-1}$.

La vitesse de rotation de la vis étant de 150 tours à la minute, le débit horaire est voisin de 20 kg.

Exemples 2, 3, 4, 5 et 7

De manière analogue, 6 autres compositions sont aussi réalisées; des précisions à leur sujet sont données dans le tableau 1.

Après mesure de l'indice de fusion des granulés, on moule par injection, à des températures comprises entre 190 et 210°C, des éprouvettes de manière à permettre de mesurer les propriétés physiques, rassemblées dans le tableau 2, de ces compositions.

On constate que, en jouant sur la nature et les proportions des deux constituants principaux, on peut obtenir des compositions de propriétés très diverses.

TABLEAU 1

| | POLYETHERAMIDE | | COPOLYMERE | | IRG. 1076 | IRG. 800 | TIN. 350 | TEMPERATURES DANS LE CO-MALAXEUR | | | | | |
|---|---|---|---|---|---|---|---|---|---|---|---|---|---|
| | NATURE | PARTIES | NATURE | PARTIES | | | | | | | | | |
| Exemple 1 | Pa 12 PTMG-1 | 30 | SBS lin. 28-72 | 70 | 0,2 | 0,1 | 0,2 | 165° | 165° | 180° | 180° | 185° | 170° |
| Exemple 2 | Pa 12 PTMG-1 | 70 | SBS lin. 28-72 | 30 | 0,2 | 0,1 | 0,2 | 165° | 165° | 185° | 180° | 185° | 175° |
| Exemple 3 | Pa 12 PTMG-1 | 80 | SIS lin. 14-86 | 20 | 0,2 | 0,1 | 0,2 | 165° | 170° | 180° | 180° | 185° | 175° |
| Exemple 4 | Pa 12 PTMG-1 | 50 | SBS ram. 35-65 | 50 | 0,2 | 0,1 | 0,2 | 155° | 165° | 170° | 170° | 170° | 160° |
| Exemple 5 | Pa 12 PTMG-2 | 70 | SBS lin. 50-50 | 30 | 0,2 | 0,1 | 0,2 | 170° | 180° | 180° | 185° | 185° | 175° |
| Exemple 6 | Pa 6 PPG | 85 | SBS lin. 28-72 | 15 | 0,2 | 0,1 | 0,2 | 180° | 190° | 195° | 190° | 190° | 195° |
| Exemple 7 | Pa 12 PTMG-1 | 20 | SBS lin. 28-72 | 80 | 0,2 | 0,1 | 0,2 | 165° | 165° | 180° | 180° | 185° | 170° |

EP 0 230 815 B1

EP 0 230 815 B1

T A B L E A U 2

| | INDICE DE FUSION | | DURETE | ESSAIS DE TRACTION | | ESSAIS DE FLEXION | | | RESISTANCE A LA DECHIRURE en KNm$^{-1}$ | |
|---|---|---|---|---|---|---|---|---|---|---|
| | à 190°C 5 kg | à 230°C 2,16 kg | SHORE A | Contrainte en MPa | Allongement en % | Flèche en mm | Contrainte en MPa | Module en MPa | sans entaille | avec entaille |
| Exemple 1 | 5,9 | | 71-70 | 10,2 | 740 | 21,9 | 1,7 | 31,6 | 48 | 46 |
| Exemple 2 | 13,0 | | 75-74 | 11,4 | 500 | 24,5 | 1,1 | 16,6 | 46 | 41 |
| Exemple 3 | 20,9 | | 71-70 | 9,9 | 430 | 25,1 | 0,9 | 15,3 | 52 | 38 |
| Exemple 4 | 12,9 | | 68-68 | 8,5 | 600 | 26,3 | 1,0 | 15,3 | 40 | 33 |
| Exemple 5 | 12,8 | | 82-79 | 12,5 | 700 | 26,0 | 1,4 | 18,2 | 45 | 41 |
| Exemple 6 | | 37,0 | 95-96 | 35,5 | 420 | 23,0 | 14,0 | 280 | 55 | 48 |
| Exemple 7 | 5 ,1 | | 69-68 | 10,9 | 810 | 23,0 | 1,9 | 36 | 44 | 34 |

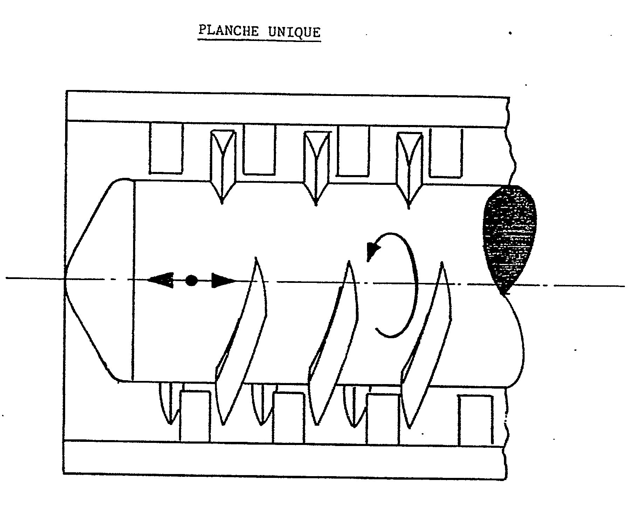

**Revendications**

1. Compositions thermoplastiques caractérisées par le fait qu'elles sont constituées essentiellement de 0,1 à 99,9 pour cent en poids de polyétheramide et de 99,9 à 0,1 pour cent en poids de copolymère styrène-diène.

2. Compositions selon la revendication 1, caractérisées en ce que le polyétheramide résulte de la copolycondensation de séquences polyamides diamines avec des séquences polyoxyalkylènes dicarboxyliques.

3. Compositions selon la revendication 1, caractérisées en ce que le polyétheramide résulte de la copolycondensation de séquences polyamides dicarboxyliques avec des séquences polyoxyalkylènes diamines.

4. Compositions selon la revendication 1, caractérisées en ce que le polyétheramide est un polyétheresteramide obtenu par polycondensation de séquences polyamides alpha-oméga dicarboxyliques avec des séquences polyoxyalkylènes alpha-oméga dihydroxylées aliphatiques.

5. Compositions selon la revendication 4, caractérisées en ce que le polyétheresteramide est obtenu par polycondensation de séquences de polyamides dicarboxyliques de poids moléculaire compris entre 600 et 5.000 appartenant au groupe constitué par les séquences de polyamide-6, de polyamide-11 et de polyamide-12, à raison de 95 à 15 % en poids, avec 5 à 85 % en poids de polyoxytétraméthylène glycol ou de polyoxypropylène glycol de poids moléculaire compris entre 200 et 3.000.

6. Compositions selon l'une quelconque des revendications 1 à 5, caractérisées en ce que le copolymère styrène-diène résulte de la copolymérisation du styrène et d'un diène choisi dans le groupe comprenant l'isoprène et le butadiène.

7. Compositions selon la revendication 6, caractérisées en ce que le copolymère est choisi dans le groupe constitué par les triséquencés linéaires ou ramifiés, styrène-butadiène-styrène et styrène-isoprène-styrène.

8. Procédé de fabrication des compositions selon les revendications 1 à 7, caractérisé en ce que l'on malaxe à l'état fondu le polyétheramide et le copolymère.

9. Procédé de fabrication des compositions selon la revendication 8, caractérisé en ce que l'on malaxe le polyétheresteramide et le copolymère à des températures comprises entre 160 et 200°C avec un taux de cisaillement sensiblement égal à 2.000 sec.$^{-1}$.

**Claims**

1. Thermoplastic compositions characterized in that they consist essentially of 0.1 to 99.9 per cent by weight of polyetheramide and of 99.9 to 0.1 per cent by weight of styrene-diene copolymer.

2. Compositions according to Claim 1, characterized in that the polyetheramide results from the copolycondensation of diamine polyamide blocks with dicarboxylic polyoxyalkalene blocks.

3. Compositions according to Claim 1, characterized in that the polyetheramide results from the copolycondensation of dicarboxylic polyamide blocks with diamine polyoxyalkylene blocks.

4. Compositions according to Claim 1, characterized in that the polyetheramide is a polyetheresteramide obtained by polycondensation of alpha, omega-dicarboxylic polyamide blocks with alpha, omega-dihydroxylated aliphatic polyoxyalkylene blocks.

5. Compositions according to Claim 1, characterized in that the polyetheramide results from the copolycondensation of dicarboxylic polyamide blocks of molecular weight between 600 and 5,000 belonging to the group consisting of polyamide 6, polyamide 11 and polyamide 12 blocks, in a proportion of 95 to 15% by weight, with 5 to 85% by weight of polyoxytetramethylene glycol or polyoxypropylene glycol of molecular weight between 200 and 3,000.

6. Compositions according to any one of Claims 1 to 5, characterized in that the styrene-diene copolymer results from the copolymerization of styrene and of a diene chosen from the group comprising isoprene and butadiene.

7. Compositions according to Claim 6, characterized in that the copolymer is chosen from the group consisting of the linear or branched triblocks, styrene-butadiene-styrene and styrene-isoprene-styrene.

8. Process for the manufacture of compositions according to Claims 1 to 7, characterized in that the polyetheramide and the copolymer are kneaded as a melt.

9. Process for the manufacture of the compositions according to Claim 8, characterized in that the polyetheresteramide and the copolymer are kneaded at temperatures of between 160 and 200°C with a shearing rate substantially equal to 2,000 s$^{-1}$.

**Patentansprüche**

1. Thermoplastische Massen, dadurch gekennzeichnet, daß sie im wesentlichen bestehen aus 0,1 bis 99,9 Gew.-% Polyetheramid und 99,9 bis 0,1 Gew.-% Styrol/Dien-Copolymer.

2. Massen nach Anspruch 1, dadurch gekennzeichnet, daß das Polyetheramid gebildet worden ist durch Copolykondensation von Polyamiddiamin-Sequenzen mit Polyoxyalkylen-dicarbonsäure-Sequenzen.

3. Massen nach Anspruch 1, dadurch gekennzeichnet, daß das Polyetheramid gebildet worden ist durch Copolykondensation von Polyamiddicarbonsäure-Sequenzen mit Polyoxyalkylen-diamin-Sequenzen.

4. Massen nach Anspruch 1, dadurch gekennzeichnet, daß das Polyetheramid ein Polyetheresteramid ist, das erhalten worden ist durch Polykondensation von $\alpha,\omega$-Dicarboxylpolyamid-Sequenzen mit aliphatischen $\alpha,\omega$-Dihydroxypolyoxyalkylen-Sequenzen.

5. Massen nach Anspruch 4, dadurch gekennzeichnet, daß das Polyetheresteramid erhalten worden ist durch Polykondensation von Dicarboxylpolyamid-Sequenzen mit einem Molekulargewicht zwischen 600 und 5 000 aus der Gruppe, bestehend aus den Sequenzen von Polyamid-6, Polyamid-11 und Polyamid-12 in einem Anteil von 95 bis 15 Gew.-%, mit 5 bis 85 Gew.-% Polyoxytetramethylenglykol oder Polyoxypropylenglykol mit einem Molekulargewicht zwischen 200 und 3 000.

6. Massen nach einem der Ansprüche 1 bis 5, dadurch gekennzeichnet, daß das Styrol/Dien-Copolymer aus der Copolymerisation von Styrol und einem Dien, ausgewählt aus der Gruppe umfassend Isopren und Butadien, stammt.

7. Massen nach Anspruch 6, dadurch gekennzeichnet, daß das Copolymer ausgewählt ist aus der Gruppe, bestehend aus den linearen oder verzweigten Trisequenzen von Styrol/Butadien/Styrol und Styrol/Isopren/Styrol.

8. Verfahren zur Herstellung der Massen nach den Ansprüchen 1 bis 7, dadurch gekennzeichnet, daß man in geschmolzenem Zustand das Polyetheramid und das Copolymer miteinander verknetet.

9. Verfahren zur Herstellung der Massen nach Anspruch 8, dadurch gekennzeichnet, daß man das Polyetheresteramid und das Copolymer bei Temperaturen zwischen 160 und 200°C mit einer Schwerkraft im wesentlichen gleich 2 000 sec$^{-1}$ verknetet.

PLANCHE UNIQUE